# EUROPÄISCHE PATENTSCHRIFT

(11) **EP 1 407 875 B1**
(45) Veröffentlichungstag und Bekanntmachung des Hinweises auf die Patenterteilung: **23.11.2005**
(21) Anmeldenummer: 03019825.3
(22) Anmeldetag: 30.08.2003
(51) Int. Cl.: B29D 22/00, B29C 70/44, F16F 9/04

(54) **Ausformung von Luftfeder-Schlauchrollbälgen**
Forming of a rolling lobe of an air spring
Formation d'un soufflet roulant tubulaire d'un ressort pneumatique

(30) Priorität: 10.10.2002 DE 10247337
(43) Veröffentlichungstag der Anmeldung: 14.04.2004
(73) Patentinhaber: ContiTech Luftfedersysteme GmbH, 30165 Hannover (DE)
(72) Erfinder: Bederna, Christoph, Dr., 31515 Wunstorf/Steinhude (DE); Gawinski, Hubertus, 31867 Lauenau (DE)
(74) Vertreter: Finger, Karsten

(56) Entgegenhaltungen:
- BE-A- 420 828
- FR-A- 1 386 115
- US-A- 3 057 768

## Beschreibung

### Anwendungsgebiet

Die Erfindung handelt von einem Verfahren zur Ausformung und Vulkanisation von Luftfeder-Schlauchrollbälgen und einer Vorrichtung zu dessen Durchführung, gemäß den Oberbegriffen der Ansprüche 1 und 7.

### Einleitung

Schlauchrollbälge, wie sie in Kraftfahrzeug-Luftfedern zum Einsatz gelangen, bestehen aus Gummi oder gummiartigen Elastomeren und sind mit Festigkeitsträgern verstärkt. Die Herstellung erfolgt zunächst in Form eines schlauchförmigen unvulkanisierten Rohlings. Um als Luftfeder-Rollbälge auf den jeweiligen Abrollkolben teleskopartig abrollen zu können, müssen die zunächst zylindrischen Schlauchrollbalg-Abschnitte in eine leicht konische oder flaschenförmige Gestalt gebracht und in dieser Form vulkanisiert werden.
Die Erfindung beschäftigt sich mit dieser Ausformung und Vulkanisation der Schlauchrollbalg-Rohlinge.

### Stand der Technik

Bei der Betrachtung des diesbezüglichen Standes der Technik wird von der US 3,057,768 ausgegangen. Der zunächst zylindrische Schlauchrollbalg-Rohling wird an einem seiner Enden konisch aufgeweitet. Zu diesem Zweck wird eine Heizmanschette in den Schlauchrollbalg-Rohling eingeführt, eine starre äußere Form mit konischem oder flaschenförmigem Hohlraum wird angelegt und nachdem beide Enden verschlossen worden sind, wird die Heizmanschette mit Heizdampf beaufschlagt, wobei der Rohling unter Druck und aufgrund der Erwärmung die anzustrebende Gestalt der äußeren Form annimmt und ausvulkanisiert, d. h.: die beiden Enden weisen letztendlich unterschiedliche Durchmesser auf.

Während die Einspannung des nichtaufzuweitenden Rohling-Endes keine besonderen Schwierigkeiten bereitet, ist ein Einspannen des aufzuweitenden Endes nicht ohne weiteres möglich und erfordert besondere Maßnahmen.
Auch lässt die gestaltliche Präzision des aufzuweitenden Rohling-Endes zu wünschen übrig. In der Praxis hat sich gezeigt, dass die Einspann-Enden für die weitere Verwendung unbrauchbar sind und deshalb abgetrennt werden müssen, d. h. es gibt beidendig Verschnitt in nicht zu vernachlässigendem Ausmaß.

### Aufgabe der Erfindung

Die Aufgabe der Erfindung besteht darin, den genannten Missständen entgegenzutreten und eine verbesserte Formungsmethode zur Aufweitung und Vulkanisation von Schlauchrollbalg-Rohlingen vorzuschlagen.

### Lösung und Vorteile

Die in den Ansprüchen 1 und 7 genannte Lösung der Erfindung besteht in der Verwendung einer Doppelrollbalg-Vorrichtung.
Deren grundsätzliche Vorteile bestehen außer in einem Verzicht auf Vorblähen (Kosten, Qualität) in einer Verminderung von Vulkanisationsfehlern. Durch das erfindungsgemäße Doppelrollbalg-Prinzip ergibt sich eine doppelte Produktivität. In der Mitte des Zwischenprodukts (Doppelrollbalg) gibt es keinen Verschnitt. Eine Automatisierbarkeit ist möglich.
Bevorzugte Ausgestaltungen und Weiterbildungen ergeben sich aus den Unteransprüchen.

### Zeichnungen

Im folgenden wird das erfindungsgemäße Konzept zur Ausformung von Schlauchrollbälgen und die damit gegebenen Vorteile anhand der beigefügten Abbildungen näher erläutert:

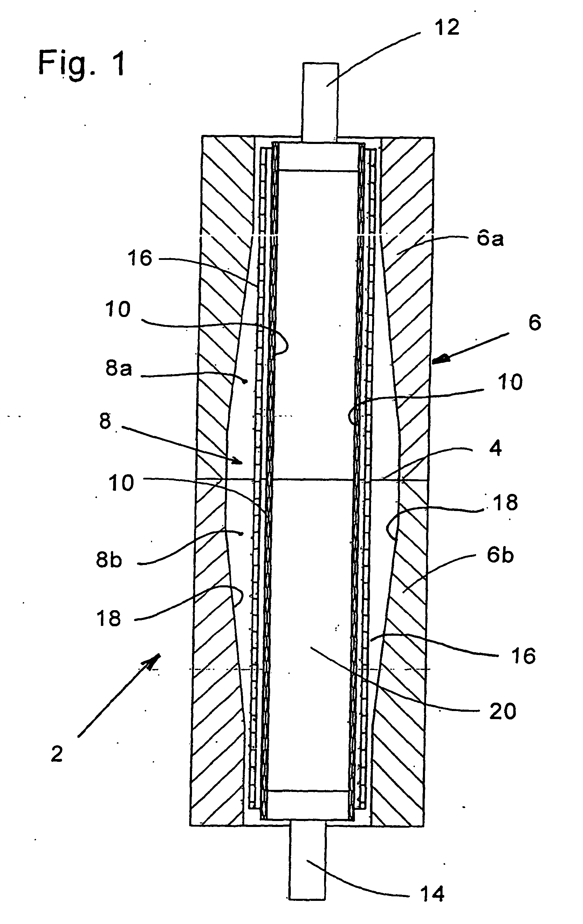

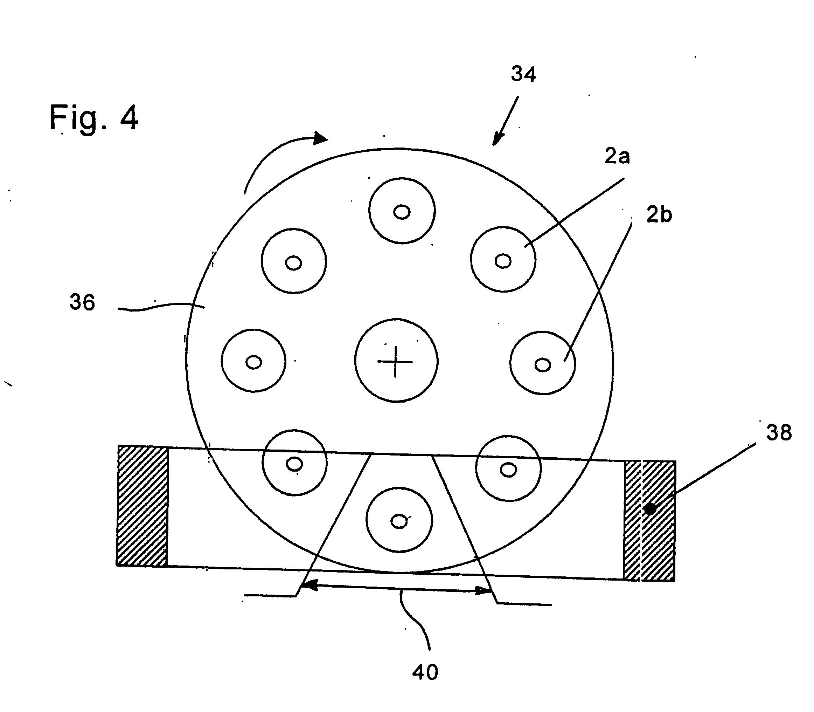

Die Figuren 1 bis 3 zeigen Prinzipdarstellungen von drei verschiedenen Ausführungsformen der erfindungsgemäßen Vorrichtung, jeweils im Längsschnitt, und Fig. 4 zeigt das Prinzip einer Mehrfachanordnung der erfindungsgemäßen Vorrichtung, im Querschnitt.

### Beschreibung

### Aufbau

Die in Fig. 1 im Längsschnitt dargestellte Vorrichtung 2 besteht aus einer zweiteiligen, in der Trennebene 4 axial geteilten Außendoppelform 6, mit einer "oberen" 6a sowie einer "unteren" Werkzeughälfte 6b. Die Werkzeughälften 6a, 6b sind beheizt, vorzugsweise elektrisch. Jede Werkzeughälfte 6a, 6b weist jeweils einen etwa flaschenförmigen Hohlraum 8a, 8b auf, die spiegelbildlich zueinander angeordnet sind, so dass sich in der Mitte des gemeinsamen Hohlraums 8 eine bauchige Aufweitung ergibt.

Im Innern der Doppelform 6 erstreckt sich axial ein zylindrischer Heizbalg 10, der aus einem wärmebeständigen elastomeren Werkstoff , vorzugsweise additionsvernetztem Silicon besteht und an seinen Enden eingespannt ist. "Obere" 12 und "untere" Einspannung 14 sind axial beweglich.

### Wirkungsweise

Zwecks Ausformung wird ein Schlauchrollbalg-Abschnitt 16 von etwa der doppelten Länge des fertigen Produktes über den Heizbalg (die Heizmanschette, 10) gestülpt.

Mit einem Druck von > 6 bar wird Druckluft in den Druckraum 20 des Heizbalgs 10 gedrückt. Dadurch bläht sich der aus Silicon bestehende Heizbalg 10 auf und drückt den sie umgebenden Schlauchrollbalg-Rohling 16 gegen die innere Wandung 18 der Außenform 6.
Durch den Aufweitvorgang verkürzt sich der Luftfeder-Rohling 16 konstruktionsbedingt axial. Die axiale Verkürzung überträgt sich durch Reibung auf den Heizbalg 10 und führt zu einer hohen mechanischen Belastung des Heizbalges 10, vor allem an den beiden Einspannnungen 12, 14. Dieses Problem wird erfindungsgemäß so gelöst, dass die axial beweglichen Einspannungen 12, 14 des Heizbalgs 10 während der Aufweitung und der damit verbundenen axialen Verkürzung dergestalt nachgeführt werden, dass die mechanische Belastung des Heizbalgs 10 klein wird.

Die Vulkanisation erfolgt mit dem Silicon-Heizbalg 10 von innen ohne Vorblähen gegen die Außenform 6. Während der Vulkanisationszeit ist die Außenform 6 beheizt. Nach einer Heizdauer von ca. 20 min ist der Vulkanisationsvorgang abgeschlossen und der Heizbalg (die Heizmanschette) 10 wird gegen die Umgebung entlüftet. Damit fällt der Heizbalg (die Heizmanschette) 10 auf den ursprünglichen Durchmesser zurück. Nach Öffnen der Außenform 6 kann der ausvulkanisierte Doppelrollbalg 16 entnommen werden. D. h.: Es werden zwei zusammenhängende Produkte in einem einzigen Schritt vulkanisiert. Anschließend wird der spiegelbildlich ausgebildete Doppelrollbalg 16 mittig zerteilt, wodurch zwei gleichgroße Rollbälge entstehen.

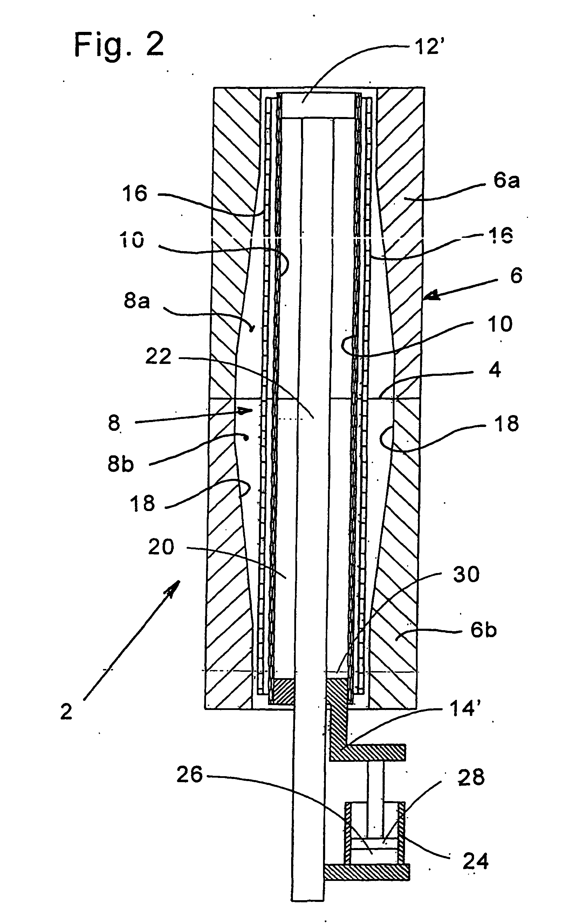

Bei der in Fig. 2 dargestellten Konstruktion ist eine "obere" Einspannung 12' des Heizbalgs 10 über eine Kolbenstange 22 durch eine "untere" Einspannung 14' geführt. Zwischen der Kolbenstange 22 und der "unteren" Einspannung 14' befindet sich ein Gleitlager sowie eine Dichtung. Diese Anordnung weist den Vorteil auf, dass die Zuführung der Rohlinge 16 bzw. die Abführung der Vulkanisate von einer Seite ungestört möglich ist. Die Versorgung des Druckraumes 20 wird über eine zentrale Bohrung in der Kolbenstange 22 sichergestellt.

Die "untere" Einspannung 14' sowie die Kolbenstange 22 sind über einen Pneumatikzylinder 24 gekoppelt. Der Druckraum 26 des Pneumatikzylinders 24 ist mit dem Druckraum 20 verbunden. Die Zylinderfläche des Kolbens 28 sowie die Kreisringfläche 30 der "unteren" Einspannung 14' sind gleich groß. Hierdurch wird sichergestellt, dass die "untere" Einspannung 14' für jeden Vulkanisationsdruck axial kraftfrei zur Kolbenstange 22 geführt wird.
Der axiale Hub des Pneumatikzylinders 24 wird über eine geeignete Messvorrichtung aufgenommen. Die axiale Position der Kolbenstange 22 wird über eine geeignete Lineareinheit so gesteuert, dass der Hub der Kolbenstange 22 stets das doppelte des Hubes des Pneumatikzylinders 24 beträgt. Hierdurch wird eine zur Trennebene 4 symmetrische Einformung erreicht.
Die Ausführung weist den Vorteil auf, dass die Lineareinheit an der Kolbenstange 22 nur kleine Kräfte übertragen muss.

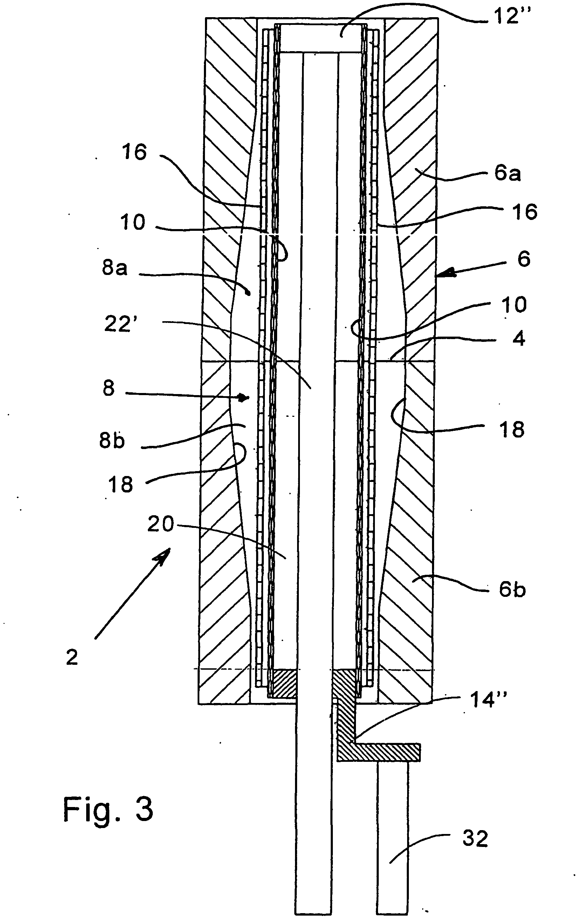

Fig. 3 zeigt eine weitere Ausführungsform der erfindungsgemäßen Vulkanisationsvorrichtung. Dabei ist eine "obere" Einspannung 12" der Heizmanschette 10 über eine Kolbenstange 22' durch eine "untere" Einspannung 14" geführt und mit einer geeigneten Lineareinheit verbunden. Die "untere" Einspannung 14" ist über eine weitere Kolbenstange 32 ebenfalls mit einer Lineareinheit verbunden. Beide Lineareinheiten werden über eine Steuerung gegensinnig als Funktion des Vulkanisationsdruckes so gefahren, dass die mechanische Belastung zwischen Manschette 10 und Einspannungen 12", 14" klein wird. Auch hier wird eine zur Trennebene 4 symmetrische Einformung erreicht.

Um die Zyklusdauer von ca. 20 min drastisch zu verringern, wird gemäß der in Fig. 4 dargestellten Weiterbildung der erfindungsgemäßen Vorrichtung 2 ein sogenanntes "Rundläuferkonzept" ("Rundläufer" 34) vorgeschlagen. Dabei sind acht komplette Vulkanisationsvorrichtungen 2a, 2b, ... nach Art eines Revolvers auf einer Trommel 36 drehbar angeordnet. Eine ortsfeste Handhabungseinrichtung 38 weist einen Arbeitsbereich 40 auf und ermöglicht das Beschichten mit Rohlingen und die Entnahme der jeweils ausvulkanisierten Produkte.

### Bezugszeichenliste

- 2, 2a, 2b, ...: Vorrichtung, Vulkanisationsvorrichtung
- 4: Trennebene
- 6: Außendoppelform, Doppelform, Außenform
- 6a: "obere" Werkzeughälfte
- 6b: "untere" Werkzeughälfte
- 8a: flaschenförmiger Hohlraum der "oberen" Werkzeughälfte
- 8b: flaschenförmiger Hohlraum der "unteren" Werkzeughälfte
- 10: Heizbalg, Heizmanschette, Manschette, Silicon-Heizbalg
- 12, 12', 12": "obere" Einspannung
- 14, 14', 14": "untere" Einspannung
- 16: Schlauchrollbalg-Abschnitt, Rohling, Schlauchrollbalg-Rohling, Luftfeder-Rohling, Doppelrollbalg
- 18: Werkzeugwandung, innere Wandung der Außenform
- 20: Druckraum
- 22, 22': Kolbenstange
- 24: Pneumatikzylinder
- 26: Druckraum des Pneumatikzylinders
- 28: Kolben
- 30: Kreisringfläche
- 32: weitere Kolbenstange
- 34: Trommel
- 38: Handhabungseinrichtung
- 40: Arbeitsbereich

## Patentansprüche

1. Verfahren zur Ausformung von Luftfeder-Schlauchrollbälgen,
**dadurch gekennzeichnet,**
- **dass** ein Schlauchrollbalg-Abschnitt (Schlauchrollbalg-Rohling, 16) von etwa der doppelten Länge des fertigen Produktes über einen Heizbalg (eine Heizmanschette, 10) geführt wird,
- **dass** Druckluft in den innerhalb des Heizbalgs (10) befindlichen Druckraum (20) gedrückt wird, wodurch sich der aus Silicon bestehende Heizbalg (10) aufbläht und den Schlauchrollbalg-Rohling (16) gegen die bauchige innere Wandung (18) einer Außenform (6) drückt, wodurch sich der Luftfeder-Rohling (16) durch den Aufweitvorgang konstruktionsbedingt axial verkürzt, und
- **dass** endseitige, axial bewegliche Einspannungen (12, 14; 12', 14' oder 12", 14") des Heizbalgs (10) während der Aufweitung und der damit verbundenen axialen Verkürzung axial dergestalt nachgeführt werden, dass die mechanische Belastung des Heizbalgs (10) klein bleibt.

2. Verfahren nach Anspruch 1,
**dadurch gekennzeichnet,**
- **dass** eine obere Einspannung (12") der Heizmanschette (10) über eine durch eine untere Einspannung (14") verlaufende Kolbenstange (22') geführt wird, und mit einer geeigneten Lineareinheit verbunden ist,
- **dass** die untere Einspannung (14") über eine weitere Kolbenstange (32) ebenfalls mit einer Lineareinheit verbunden ist, und
- **dass** beide Lineareinheiten über eine Steuerung gegensinnig als Funktion des Vulkanisationsdruckes so geführt werden, dass die mechanische Belastung zwischen Heizbalg (10) und Einspannung (12", 14") klein bleibt.

3. Verfahren nach Anspruch 1 oder 2,
**dadurch gekennzeichnet,**
**dass** die Vulkanisation mit dem Heizbalg (10) von innen ohne Vorblähen gegen die Außenform (6) erfolgt,
wobei die Außenform (6) während der Vulkanisationszeit beheizt ist.

4. Verfahren nach einem der Ansprüche 1 bis 3,
**dadurch gekennzeichnet,**
**dass** der ausvulkanisierte Doppelrollbalg (16) nach Öffnen der Außenform (6) entnommen wird.

5. Verfahren nach einem der Ansprüche 1 bis 4,
**dadurch gekennzeichnet,**
**dass** der spiegelbildlich ausgebildete Doppelrollbalg (16) mittig zerteilt wird, wodurch zwei gleichgroße Rollbälge entstehen.

6. Verfahren nach einem der Ansprüche 1 bis 5,
**dadurch gekennzeichnet,**
**dass** die Versorgung des Druckraumes (20) über eine zentrale Bohrung in einer die Einspannungen (12', 14' oder 12", 14") verbindende Kolbenstange (22 oder 22') erfolgt.

7. Vorrichtung zur Durchführung des Verfahrens nach einem der Ansprüche 1 bis 6,
mit einer Außenform (6) und mit einem zylindrischen Heizbalg (10),
**dadurch gekennzeichnet,**
- **dass** die Außenform (6) in einer Trennebene (4) in eine obere (6a) sowie eine unteren Werkzeughälfte (6b) geteilt ist,
wobei beide Werkzeughälften (6a, 6b) jeweils einen etwa flaschenförmigen Hohlraum (8a, 8b) aufweisen und spiegelbildlich zueinander angeordnet sind, so dass sich in der Mitte des gemeinsamen Hohlraums (8) eine bauchige Aufweitung (8) ergibt, und
- **dass** sich der Heizbalg (10) im Innern der Doppelform (6) axial erstreckt, etwa die Länge eines zu vulkanisierenden Doppelrollbalgs (16) aufweist, und dessen Enden in eine oberen (12, 12' oder 12") und in eine untere Einspannung (14, 14' oder 14") axial beweglich eingespannt sind.

8. Vorrichtung nach Anspruch 7,
**dadurch gekennzeichnet,**
**dass** die obere Einspannung (12') des Heizbalgs (10) über eine Kolbenstange (22) mit einer unteren Einspannung (14') axial beweglich verbunden ist,
wobei sich zwischen der Kolbenstange (22) und der unteren Einspannung (14') ein Gleitlager sowie eine Dichtung befindet.

9. Vorrichtung nach Anspruch 8,
**dadurch gekennzeichnet,**
**dass** die untere Einspannung (14') sowie die Kolbenstange (22) über einen Pneumatikzylinder (24) gekoppelt sind, und dass der Druckraum (26) des Pneumatikzylinders (24) mit dem Druckraum (20) des Heizbalgs (10) verbunden ist,
wobei die Zylinderfläche des Kolbens (28) und die Kreisringfläche (30) der unteren Einspannung (14') gleichgroß sind.

10. Vorrichtung nach Anspruch 7 oder 8,
**dadurch gekennzeichnet,**
**dass** der Hub der Kolbenstange (22) stets das doppelte des Hubs des Pneumatikzylinders (24) beträgt.

11. Vorrichtung nach Anspruch 7,
**dadurch gekennzeichnet,**
- **dass** eine obere Einspannung (12") der Heizmanschette (10) über eine Kolbenstange (22') durch eine untere Einspannung (14") geführt und mit einer Lineareinheit verbunden ist, und
- **dass** die untere Einspannung (14") über eine weitere Kolbenstange (32) ebenfalls mit einer Lineareinheit verbunden ist.

12. Vorrichtung nach einem der Ansprüche 7 bis 11,
**dadurch gekennzeichnet,**
**dass** die Werkzeughälften (6a, 6b) elektrisch beheizbar sind.

13. Vorrichtung nach einem der Ansprüche 7 bis 12,
**dadurch gekennzeichnet,**
**dass** der Heizbalg (10) etwa die Länge eines auszuformenden Schlauchrollbalg-Abschnittes (16) aufweist und aus einem wärmebeständigen elastomeren Werkstoff besteht.

14. Vorrichtung nach einem der Ansprüch 7 bis 13,
**gekennzeichnet durch**
einen Rundläufer (34),
- wobei mehrere Vulkanisationsvorrichtungen (2a, 2b, ...) auf einer Trommel (36) drehbar angeordnet sind, und
- wobei eine Handhabungseinrichtung (38) mit einem Arbeitsbereich (40) das Beschichten mit Rohlingen (16) und die Entnahme der jeweils ausvulkanisierten Produkte ermöglicht.

## Claims

1. Method of forming rolling lobes of an air spring,
**characterized**
- **in that** a rolling lobe portion (rolling lobe blank, 16) of approximately twice the length of the finished product is passed over a curing bladder (a heating sleeve, 10),
- **in that** compressed air is forced into the pressure chamber (20) located inside the curing bladder (10), whereby the curing bladder (10), consisting of silicone, is inflated and presses the rolling lobe blank (16) against the concave inner wall (18) of an outer mould (6), whereby, as a result of the structural design, the air spring blank (16) is axially shortened by the expansion process, and
- **in that** axially movable end restraints (12, 14; 12', 14' or 12'', 14") of the curing bladder (10) are axially adjusted during the expansion and the accompanying axial shortening in such a way that the mechanical loading on the curing bladder (10) remains small.

2. Method according to Claim 1, **characterized**
- **in that** an upper restraint (12'') of the heating sleeve (10) is guided by means of a piston rod (22') running through a lower restraint (14''), and is connected to a suitable linear unit,
- **in that** the lower restraint (14") is likewise connected to a linear unit by means of a further piston rod (32), and
- **in that** the two linear units are guided in opposite directions by means of a control as a function of the vulcanizing pressure in such a way that the mechanical loading between the curing bladder (10) and the restraint (12'', 14") remains small.

3. Method according to Claim 1 or 2, **characterized in that** the vulcanization with the curing bladder (10) takes place from the inside against the outer mould (6) without pre-inflation, the outer mould (6) being heated during the vulcanizing time.

4. Method according to one of Claims 1 to 3, **characterized in that** the fully vulcanized double rolling lobe (16) is removed after opening the outer mould (6).

5. Method according to one of Claims 1 to 4, **characterized in that** the mirror-invertedly formed double rolling lobe (16) is divided centrally, producing two rolling lobes of equal size.

6. Method according to one of Claims 1 to 5, **characterized in that** the supply to the pressure chamber (20) takes place via a central bore in a piston rod (22 or 22') connecting the restraints (12', 14' or 12", 14").

7. Device for carrying out the method according to one of Claims 1 to 6, with an outer mould (6) and with a cylindrical curing bladder (10), **characterized**
- **in that** the outer mould (6) is divided in a parting plane (4) into an upper mould half (6a) and a lower mould half (6b), the two mould halves (6a, 6b) respectively having an approximately bottle-shaped cavity (8a, 8b) and being arranged mirror-invertedly in relation to each other, so that a convex widening (8) is obtained in the middle of the common cavity (8), and
- **in that** the curing bladder (10) extends axially inside the double mould (6), is approximately the same length as a double rolling lobe (16) to be vulcanized, and the ends of which are restrained in an axially movable manner in an upper restraint (12, 12' or 12") and in a lower restraint (14, 14' or 14").

8. Device according to Claim 7, **characterized in that** the upper restraint (12') of the curing bladder (10) is connected in an axially movable manner to a lower restraint (14') by means of a piston rod (22), with a sliding bearing and a seal being located between the piston rod (22) and the lower restraint (14').

9. Device according to Claim 8, **characterized in that** the lower restraint (14') and the piston rod (22) are coupled by means of a pneumatic cylinder (24), and **in that** the pressure chamber (26) of the pneumatic cylinder (24) is connected to the pressure chamber (20) of the curing bladder (10), with the cylindrical face of the piston (28) and the annular face (30) of the lower restraint (14') being of the same size.

10. Device according to Claim 7 or 8, **characterized in that** the stroke of the piston rod (22) is always twice the stroke of the pneumatic cylinder (24).

11. Device according to Claim 7, **characterized**
- **in that** an upper restraint (12") of the heating sleeve (10) is guided through a lower restraint (14'') by means of a piston rod (22') and is connected to a linear drive, and
- **in that** the lower restraint (14") is likewise connected to a linear unit by means of a further piston rod (32).

12. Device according to one of Claims 7 to 11, **characterized in that** the mould halves (6a, 6b) are electrically heatable.

13. Device according to one of Claims 7 to 12, **characterized in that** the heating bladder (10) is approximately the same length as a portion of a rolling lobe (16) to be formed and consists of a heat-resistant elastomeric material.

14. Device according to one of Claims 7 to 13, **characterized by** a rotary table (34),
- a number of vulcanizing devices (2a, 2b, ...) being rotatably arranged on a drum (36), and
- a handling device (38) with a working area (40) permitting the coating with blanks (16) and the removal of the respectively fully vulcanized products.

## Revendications

1. Procédé de formation de soufflets d'amortissement pneumatique, **caractérisé en ce que**
- un tronçon de soufflet d'amortissement pneumatique (ébauche de soufflet d'amortissement pneumatique, 16) dont la longueur est sensiblement le double de celle du produit fini est guidé dans un soufflet chauffant (une manchette chauffante 10),
- **en ce que** de l'air comprimé est injecté dans l'espace sous pression (20) qui se trouve dans le soufflet chauffant (10), ce qui gonfle le soufflet chauffant (10) en silicone et repousse l'ébauche (16) de soufflet d'amortissement pneumatique contre la paroi intérieure ventrue (18) d'un moule extérieur (6), ce qui de manière conditionnée par sa structure raccourcit axialement l'ébauche (16) d'amortisseur pneumatique du fait de l'opération d'élargissement et
- **en ce que** des fixations d'extrémité (12, 14; 12', 14' ou 12", 14'') mobiles axialement du soufflet chauffant (10) sont ajustées axialement lors de l'élargissement et lors du raccourcissement axial qui y est associé, de telle manière que le soufflet chauffant (10) reste mécaniquement peu sollicité.

2. Procédé selon la revendication 1, **caractérisé en ce que**
- une fixation supérieure (12") de la manchette chauffante (10) est guidée au moyen d'une tige de piston (22') qui s'étend à travers une fixation inférieure (14'') et est liée à une unité linéaire appropriée,
- **en ce que** la fixation inférieure (14'') est également liée à une unité linéaire au moyen d'une autre tige de piston (32) et
- **en ce que** les deux unités linéaires sont guidées en sens opposé au moyen d'une commande en fonction de la pression de vulcanisation de telle manière que la sollicitation mécanique entre le soufflet chauffant (10) et les fixations (12'', 14'') reste faible.

3. Procédé selon les revendications 1 ou 2, **caractérisé en ce qu'**on exécute la vulcanisation de l'intérieur au moyen du soufflet chauffant (10) sans gonfler préalablement ce dernier contre le moule extérieur (6), le moule extérieur (6) étant chauffé pendant de la vulcanisation.

4. Procédé selon l'une des revendications 1 à 3, **caractérisé en ce que** le double soufflet d'amortissement (16) complètement vulcanisé est retiré après ouverture du moule extérieur (6).

5. Procédé selon l'une des revendications 1 à 4, **caractérisé en ce que** le double soufflet d'amortissement (16) de configuration symétrique est divisé en son milieu, ce qui crée deux soufflets d'amortissement de taille égale.

6. Procédé selon l'une des revendications 1 à 5, **caractérisé en ce que** l'espace sous pression (20) est alimenté par l'intermédiaire d'une perforation centrale ménagée dans une tige de piston (22 ou 22') qui relie les fixations (12', 14' ou 12'', 14'') .

7. Dispositif en vue de la mise en oeuvre du procédé selon l'une des revendications 1 à 6, qui présente un moule extérieur (6) et un soufflet chauffant cylindrique (10), **caractérisé en ce que**
- un plan de séparation (4) divise le moule extérieur (6) en une moitié supérieure d'outil (6a) et en une moitié inférieure d'outil (6b),
les deux moitiés d'outil (6a, 6b) présentant chacune un espace creux (8a, 8b) sensiblement en forme de bouteille et étant agencées de manière symétrique l'une par rapport à l'autre de manière à obtenir un élargissement ventru (8) au milieu de l'espace creux commun (8) et
- **en ce que** le soufflet chauffant (10) s'étend axialement à l'intérieur du double moule (6), présente sensiblement la largeur d'un double soufflet d'amortissement (16) à vulcaniser dont les extrémités sont fixées dans une fixation supérieure (12, 12' ou 12") et dans une fixation inférieure (14, 14' ou 14") de manière à pouvoir être déplacées axialement.

8. Dispositif selon la revendication 7, **caractérisé en ce que** la fixation supérieure (12') du soufflet chauffant (10) est reliée à une fixation inférieure (14') par l'intermédiaire d'une tige de piston (22) pour pouvoir être déplacée axialement,
un palier de glissement et un joint d'étanchéité étant agencés entre la tige de piston (22) et la fixation inférieure (14').

9. Dispositif selon la revendication 8, **caractérisé en ce que** la fixation inférieure (14') et la tige de piston (22) sont couplées au moyen d'un cylindre pneumatique (24) et **en ce que** l'espace sous pression (26) du cylindre pneumatique (24) est relié à l'espace sous pression (20) du soufflet chauffant (10), la surface de cylindre du piston (28) et la surface torique (30) de la fixation inférieure (14') étant de taille égale.

10. Dispositif selon les revendications 7 ou 8, **caractérisé en ce que** la course de la tige de piston (22) est toujours égale au double de celle du cylindre pneumatique (24).

11. Dispositif selon la revendication 7, **caractérisé en ce que**
- une fixation supérieure (12'') de la manchette chauffante (10) est guidée à travers une fixation inférieure (14") au moyen d'une tige de piston (22') et est reliée à une unité linéaire et
- **en ce que** la fixation inférieure (14'') est également liée à une unité linéaire au moyen d'une autre tige de piston (32).

12. Dispositif selon l'une des revendications 7 à 11, **caractérisé en ce que** les moitiés d'outil (6a, 6b) peuvent être chauffées électriquement.

13. Dispositif selon l'une des revendications 7 à 12, **caractérisé en ce que** le soufflet chauffant (10) présente sensiblement la longueur d'un tronçon (16) de soufflet d'amortissement pneumatique à mouler et est fabriqué en un matériau élastomère qui résiste à la chaleur.

14. Dispositif selon l'une des revendications 7 à 13, **caractérisé par** un plateau tournant (34) qui présente
- plusieurs dispositifs de vulcanisation (2a, 2b,...) agencés à rotation sur un tambour (36) et
- un dispositif de manipulation (38) qui présente une zone de travail (40) et qui permet d'introduire les ébauches (16) et de retirer les produits lorsqu'ils sont complètement vulcanisés.
